# EUROPÄISCHE PATENTSCHRIFT

(11) **EP 4 308 843 B1**
(45) Veröffentlichungstag und Bekanntmachung des Hinweises auf die Patenterteilung: **06.05.2026**
(21) Anmeldenummer: 22712360.1
(22) Anmeldetag: 09.03.2022
(51) Int. Cl.: F16M 11/04

(54) **STATIV FÜR EIN BILDAUFNAHMEGERÄT, INSBESONDERE EINE WÄRMEBILDKAMERA, SOWIE SYSTEM ZUM ERFASSEN VON OBJEKTEN UMFASSEND EIN DERARTIGES STATIV**
STAND FOR AN IMAGE RECORDING DEVICE, IN PARTICULAR A THERMAL IMAGING CAMERA, AND SYSTEM FOR DETECTING OBJECTS COMPRISING A STAND OF THIS KIND
SUPPORT POUR DISPOSITIF D'ENREGISTREMENT D'IMAGES, EN PARTICULIER POUR CAMÉRA D'IMAGERIE THERMIQUE, ET SYSTÈME DE DÉTECTION D'OBJETS COMPRENANT UN TEL SUPPORT

(30) Priorität: 17.03.2021 DE 202021101357 U
(43) Veröffentlichungstag der Anmeldung: 24.01.2024
(60) Teilanmeldung: 26168859.2
(73) Patentinhaber: Xspecter GmbH, 91462 Dachsbach (DE)
(72) Erfinder: MÄHLER, Matthias, 91486 Uehlfeld (DE)
(74) Vertreter: Rau, Schneck & Hübner Patentanwälte Rechtsanwälte PartGmbB
(86) Internationale Anmeldenummer: PCT/EP2022/055974
(87) Internationale Veröffentlichungsnummer: WO 2022/194625

(56) Entgegenhaltungen:
- CN-U- 209 876 417
- GB-A- 2 530 536
- US-A- 2 653 507
- US-A1- 2008 149 789

## Beschreibung

Die vorliegende Patentanmeldung nimmt die Priorität der deutschen Gebrauchsmusteranmeldung DE 20 2021 101 357.5 in Anspruch, deren Inhalt durch Bezugnahme hierin aufgenommen wird.

US 2008/0 149 789 A1 offenbart eine motorisch steuerbare Wandhalterung für einen Monitor.

GB 2 530 536 A offenbart fotografisches Zubehör in Form eines schwenk/neigbaren Stativs für ein Blitzgerät.

Die Erfindung betrifft ein Stativ für ein Bildaufnahmegerät, insbesondere eine Wärmebildkamera, sowie ein System zum Erfassen von Objekten mit einem derartigen Stativ.

Die Erfassung von Objekten mit einem Bildaufnahmegerät, insbesondere die Erfassung von Lebewesen, insbesondere von Wildtieren, mit einer Wärmebildkamera, ist beispielsweise bei Jägern bekannt. Bei der Überwachung von großflächigen Revieren hat es sich als zweckmäßig erwiesen, die Wärmebildkamera aus einem fahrenden Fahrzeug, insbesondere einem PKW, zu nutzen. Da die Autoscheiben für den Spektralbereich der Infrarotstrahlung, die für die Wärmebildkamera relevant ist, nicht transmissiv sind, muss die Überwachung mit der Wärmebildkamera durch ein geöffnetes Fenster im PKW erfolgen. Eine derartige Überwachung ist wenig komfortabel, insbesondere bei kalten Außentemperaturen in den Wintermonaten.

Es existieren Wärmebildkameras, die eine integrierte Befestigungsvorrichtung aufweisen, um sie an einer Außenseite des Kraftfahrzeugs zu befestigen. Diese integrierte Lösung ist kostenaufwändig. Aufgrund der integrierten Befestigungsvorrichtung ist die Wärmebildkamera bezüglich ihrer weiteren Verwendung wenig flexibel. Insbesondere die Nutzung der Wärmebildkamera mit integrierte Befestigungsvorrichtung als Handgerät ist aufgrund des erhöhten Gewichts nachteilig.

Der Erfindung liegt die Aufgabe zugrunde, die Überwachung von Objekten, insbesondere von Lebewesen und insbesondere von Wildtieren, zu verbessern und insbesondere eine flexible und kosteneffiziente Lösung bereitzustellen.

Diese Aufgabe wird durch ein Stativ mit den Merkmalen des Anspruchs 1 sowie durch ein System mit den Merkmalen des Anspruchs 12 gelöst.

Erfindungsgemäß wurde erkannt, dass ein Bildaufnahmegerät, insbesondere eine Wärmebildkamera, insbesondere eine optische Kamera und/oder insbesondere eine Kamera mit Nachtsicht-Funktion, vorteilhaft für die Erfassung von Objekten, insbesondere von Lebewesen und insbesondere von Wildtieren, mit einem Stativ genutzt werden kann, das lösbar an einer Unterlage befestigbar ist. Als Unterlage dient insbesondere eine im Wesentlichen flächige Komponente an einer Außenseite eines Kraftfahrzeugs, die in einer Grundstellung im Wesentlichen horizontal orientiert ist. Als Unterlage kann beispielsweise das Kraftfahrzeugdach, die Frontklappe, die Heckklappe oder eine Ladefläche dienen. Das Stativ weist eine Befestigungseinheit auf, die insbesondere eine Befestigungsebene definiert.

Das Stativ weist insbesondere eine Kopplungseinheit auf, um das Bildaufnahmegerät lösbar mit dem Stativ zu verbinden. Die Kopplungseinheit ist insbesondere an einem Sockel des Stativs befestigt. Insbesondere ist die Kopplungseinheit als sogenannter Schnellwechseladapter ausgeführt, der mit einem entsprechenden Gegenstück, das an der Wärmebildkamera befestigt ist, ein unkompliziert handhabbares und dennoch sicheres Koppeln der Wärmebildkamera mit dem Stativ ermöglicht. Die Kopplungseinheit kann auch durch eine Schraubverbindung ausgeführt sein.

Erfindungsgemäß wurde erkannt, dass das Stativ eine flexible und kosteneffiziente Nutzung einer an sich bekannten Wärmebildkamera ermöglicht. Vor allem wurde gefunden, dass die Nutzung mobiler Wärmebildkameras bei Jägern verbreitet ist. Ein Nutzer, der bereits im Besitz einer Wärmebildkamera ist, kann mit dem erfindungsgemäßen Stativ ein System schaffen, das es ihm ermöglicht, Wildtiere in besonders komfortabler Weise zu überwachen. Der Investitionsaufwand ist reduziert. Darüber hinaus ermöglicht das Stativ eine zuverlässige Erfassung von Lebewesen, insbesondere von Wildtieren. Dadurch, dass die Wärmebildkamera mittels des Stativs zuverlässig an einem Kraftfahrzeug befestigbar ist, können auch großflächige Reviere komfortabel mit dem Kraftfahrzeug abgefahren werden, wobei die Wärmebildkamera in der mit dem Stativ festgelegten Position verbleiben kann.

Wenn die Verwendung der Wärmebildkamera mit dem Stativ beendet ist, kann der Nutzer die Wärmebildkamera problemlos von dem Stativ entkoppeln und - wie bisher - beispielsweise als mobile Wärmebildkamera nutzen. Es ist für den Nutzer insbesondere nicht erforderlich, dass er sich eine zusätzliche, zweite und insbesondere kostenaufwendige integrierte Wärmebildkamera anschafft. Mit dem Stativ wird insbesondere für Jäger eine flexible und kosteneffiziente Lösung geschaffen.

Das Stativ weist einen Drehteller auf, der um eine Drehachse bezüglich der Befestigungseinheit drehbar ist. Die Drehachse ist insbesondere senkrecht zu der Befestigungsebene orientiert. Zum Drehen des Drehtellers um die Drehachse ist ein Drehantrieb vorgesehen. Der Drehantrieb ermöglicht ein Drehen des Drehtellers um die Drehachse. Wenn das Stativ auf einer horizontalen Unterlage angeordnet ist, ist die Drehachse vertikal orientiert. An dem Drehteller ist der um eine Schwenkachse schwenkbare Sockel befestigt. Die Schwenkachse ist quer und insbesondere senkrecht zur Drehachse orientiert. Die Schwenkachse ist insbesondere horizontal orientiert. Zum Schwenken des Sockels ist ein Schwenkantrieb vorgesehen.

Das Stativ weist ferner mindestens eine Stromquelle auf, um den Drehantrieb und den Schwenkantrieb mit elektrischem Strom zu versorgen. Die Stromquelle ist insbesondere als wiederaufladbare Batterie, also als Akkumulator, ausgeführt. Als besonders vorteilhaft haben sich Lithium-Ionen-Akkumulatoren erwiesen. Derartige Akkumulatoren weisen eine hohe spezifische Energiedichte auf, insbesondere mehr als 100 Wh/kg, insbesondere mindestens 125 Wh/kg und insbesondere mindestens 150 Wh/kg. Der Ackumulator ermöglicht eine Betriebsdauer des Stativs von mindestens 2 Stunden, insbesondere mindestens 4 Stunden, insbesondere mindestens 5 Stunden und insbesondere mindestens 6 Stunden. Besonders vorteilhaft ist es, wenn der Akkumulator einen Ladeanschluss in Form einer USB-Buchse aufweist. Dadurch ist insbesondere ein mobiles Laden der Stromquelle, insbesondere über das Kraftfahrzeug selbst und/oder über einen mobilen Stromspeicher, insbesondere eine sogenannte Powerbank, möglich. Der Ladeanschluss für die Stromquelle kann auch eine andere Anschlussbuchse, insbesondere gemäß einem standardisierten Anschluss, aufweisen.

Insbesondere weist das Stativ mehrere Ladeanschlüsse auf, insbesondere mindestens einen Ladeanschluss in einem Bereich des Stativs, der der Kopplungseinheit räumlich benachbart ist. Dadurch wird ein, zumindest vorrübergehende, Stromversorgung des Bildaufnahmegeräts, vereinfacht. Der mindestens eine Ladeanschluss ist insbesondere als sogenannter Powerport ausgeführt und dient insbesondere zum Laden des Bildaufnahmegeräts und/oder der Stromquelle.

Vorteilhaft ist es, wenn das Stativ eine mechanische Aufnahme aufweist, insbesondere eine Halterung, insbesondere zum Einstecken und/oder Einschieben, eines mobilen Stromspeichers. Das Mitführen eines Stromspeichers mit dem Stativ ist dadurch verbessert, insbesondere ist das zuverlässige und verlustfreie Mitführen gewährleistet. Dadurch ist eine zuverlässige Stromversorgung möglich. An dem Stativ können mehrere Aufnahmen oder Halterungen für mobile Stromspeicher, sogenannte Powerbanks, vorgesehen sein. Dazu können die Aufnahmen schachtartig oder laschenartig ausgeführt sein und insbesondere mit Schließelement wie Gurten oder Klappen ausgeführt sein und/oder eine klemmende Aufnahme einer Powerbank ermöglich. Die Aufnahme kann an ihrer Innenseite mit einem weichelastischen Material schützend ausgekleidet sein.

Das Stativ weist eine Steuerungs-/Regelungseinheit auf, mittels der der Drehantrieb und der Schwenkantrieb gesteuert und insbesondere geregelt betätigt werden können. Dadurch ist die Funktionalität des Stativs, insbesondere für die Nutzung der an dem Stativ befestigbaren Wärmebildkamera, verbessert. Die Steuerungs-/Regelungseinheit steht insbesondere mit dem Drehantrieb und mit dem Schwenkantrieb in Signalverbindung. Diese Signalverbindung ist insbesondere kabelgebunden und dadurch besonders robust. Es ist aber auch möglich, diese Signalverbindung kabellos auszuführen.

Zur Bedienung des Stativs dient eine Fernbedienung. Die Fernbedienung steht mit der Steuerungs-/Regelungseinheit in Signalverbindung. Diese Signalverbindung ist insbesondere kabellos ausgeführt, insbesondere als Funk-Signalübertragung und insbesondere mittels Bluetooth-Technologie. Es ist grundsätzlich auch denkbar, diese Signalverbindung kabelgebunden auszuführen. Die Fernbedienung weist insbesondere Eingabeelemente auf, um eine gewünschte Betätigung der Antriebe und/oder anderer Komponenten an die Steuerungs-Regelungseinheit zu übertragen. Als vorteilhaft hat sich ein Bedienelement in Form eines Joysticks erwiesen, um den Drehantrieb und den Schwenkantrieb zu betätigen. Die Fernbedienung kann eine integrierte Stromquelle aufweisen, die insbesondere analog der Stromquelle des Stativs einen Ladeanschluss in Form einer USB-Buchse aufweist. Insbesondere ist die Stromquelle als Akkumulator ausgeführt und insbesondere identisch zu dem Akkumulator des Stativs.

Eine Befestigungseinheit mit mindestens einem Befestigungselement ist flexibel einsetzbar. Besonders vorteilhaft ist es, wenn die Befestigungseinheit mehrere Befestigungselemente aufweist, um insbesondere Unebenheiten der Unterlage auszugleichen. Insbesondere Kraftfahrzeugdächer sind typischerweise zumindest leicht gekrümmt ausgeführt. Durch die Verwendung mehrerer Befestigungselemente, insbesondere zwei und insbesondere drei oder mehr, gelingt es, das Stativ an gekrümmten Unterlagen zuverlässig und definiert anzubringen. Die Verwendung von Saugnäpfen ist fehlersicher und kosteneffizient. Es ist denkbar, anstelle der Saugnäpfe oder zusätzlich die Befestigung mittels eines Magnetelements vorzusehen. Es ist insbesondere denkbar, dass die Befestigungseinheit sowohl mindestens einen Saugnapf als auch mindestens einen Magnetfuß umfasst.

Zusätzlich oder alternativ kann mindestens ein Befestigungselement dazu ausgeführt sein, eine, insbesondere vorübergehend, feste Befestigung an einer Unterlage zu gewährleisten. Das mindestens eine Befestigungselement kann Schraubbefestigungen ermöglichen. Eine Schraubbefestigung ermöglicht insbesondere eine dauerhaft zuverlässige Befestigung. Die Überwachung von statischen Objekten, insbesondere von Gebäuden, ist dadurch verbessert.

Ein Stativ, bei dem der Sockel um eine Rollachse schwenkbar an dem Drehteller befestigt ist, ermöglicht eine bessere Bildstabilisierung. Dazu ist der Sockel um eine Rollachse schwenkbar an dem Drehteller befestigt. Die Rollachse ist quer und insbesondere senkrecht zur Schwenkachse orientiert.

Insbesondere ist der Sockel derart am Drehteller schwenkbar angeordnet, dass der Sockel automatisch, insbesondere schwerkraftbedingt, in eine vertikale Grundstellung zurück verlagert wird, sollte er unbeabsichtigt in Folge einer Fahrbewegung des Kraftfahrzeugs aus der Grundstellung heraus ausgelenkt worden sein. Dadurch können Unebenheiten im Gelände vorteilhaft ausgeglichen werden. Es ist ein Rollantrieb vorgesehen, der eine entsprechende Ausgleichs-Rollbewegung veranlasst, sobald der Sockel aus der vertikalen Grundstellung, insbesondere in Folge einer Geländeneigung, ausgelenkt wird. Der Rollantrieb ist mit der Steuerungs-/Regelungseinheit in bidirektionaler Signalverbindung. Insbesondere kann das Stativ mindestens einen Neigungssensor aufweisen, der eine Auslenkung des Stativs gegenüber der vertikalen Grundorientierung erfasst. Der Sensor steht mit der Steuerungs-/Regelungseinheit in Signalverbindung.

Ein Stativ gemäß Anspruch 2 ist robust ausgeführt. Ein Gehäuse weist insbesondere einen Innenraum auf, in dem insbesondere die Steuerungs-/Regelungseinheit, der Drehantrieb und/oder die Stromquelle angeordnet sind. Die in dem Gehäuse angeordneten Komponenten sind geschützt, insbesondere spritzwassergeschützt und entsprechen insbesondere der Schutzart IP44. Das Gehäuse weist insbesondere einen lösbar montierten Deckel auf, der insbesondere schraubbar verbindbar ist. Die Zugänglichkeit in den Innenraum des Gehäuses ist dadurch vereinfacht. Das Gehäuse selbst ist insbesondere aus einem Kunststoffmaterial hergestellt, das insbesondere kostengünstig und leichtbauend ist. Es ist möglich, das Gehäuse auch aus Metall, insbesondere Metallblech oder Metalldruckgussteilen, aus Holz und/oder Glas herzustellen.

Besonders vorteilhaft ist es, wenn gemäß Anspruch 3 die Befestigungselemente der Befestigungseinheit veränderlich an dem Sockel anordenbar sind. Insbesondere sind die Befestigungselemente mittels einer Kugelkopfbefestigung schwenkbar an dem Sockel befestigt. Dadurch lassen sich die Befestigungselemente jeweils einzeln schwenkbar gegenüber dem Sockel ausrichten. Dadurch ist eine flexible und zuverlässige Befestigung an nahezu beliebig gekrümmten Unterlagen möglich.

Ein Stativ gemäß Anspruch 4 ermöglicht eine exakte Steuerung des Drehantriebs und/oder des Schwenkantriebs. Als besonders vorteilhaft hat sich die Ausführung als bürstenloser Motor erwiesen. Denkbar ist auch die Verwendung von Servomotoren.

Ein Stativ gemäß Anspruch 5 ermöglicht eine unkomplizierte Handhabung. Die Steuerung des Stativs kann bequem von einem Bediener im Kraftfahrzeug und insbesondere bei geschlossenem Fenster erfolgen. Insbesondere erfolgt die Signalverbindung mittels einer Funkverbindung, insbesondere mittels Bluetooth. Vorteilhaft ist es, wenn die Signalverbindung zwischen der Fernbedienung und der Steuerungs-/Regelungseinheit eine Reichweite von mindestens 5 m, insbesondere von mindestens 10 m und insbesondere mindestens 20 m aufweist.

Ein Stativ gemäß Anspruch 6 ermöglicht die Nutzung in Verbindung mit einer Wärmebildkamera, insbesondere durch Positionsverfolgung. Ein Positionssensor ist insbesondere an das GPS angeschlossen. Der Positionssensor ist insbesondere in dem Gehäuse angeordnet.

Ein Stativ gemäß Anspruch 7 ermöglicht insbesondere einen sogenannten Trackingmodus der Wärmebildkamera, die zur Nachverfolgung eines erfassten Lebewesens genutzt werden kann. Insbesondere in Kombination mit dem Positionssensor ist es dadurch möglich, ein als Ziel erfasstes Objekt mittels des Stativs, insbesondere gesteuert und insbesondere geregelt, nachzuverfolgen. Der Entfernungssensor ist insbesondere in dem Gehäuse angeordnet. Der Entfernungssensor ist insbesondere als Laser-Distanz-Sensor ausgeführt und kann Entfernungen über mehrere 100 m erfassen.

Insbesondere ist eine Betriebsweise des Stativs denkbar, bei der der Benutzer auf der Anzeigeeinheit ein von der Kamera angezeigtes Objekt als Ziel identifiziert, insbesondere durch Berühren eines bestimmten Bereichs des Berührbildschirms. Für ein so identifiziertes Ziel kann der Positionssensor die Entfernung ermitteln und als Information über die Anzeigeeinheit ausgeben lassen. Diese Entfernungsinformation ist insbesondere für einen Jäger, insbesondere vor der Schussabgabe, wichtig.

Vorteilhafterweise ist der Entfernungssensor am Stativ angeordnet oder darin integriert. Zusätzlich oder alternativ kann der Entfernungssensor an der Kamera angeordnet oder darin integriert sein.

Die Sensoren gemäß Anspruch 6 oder 7 stehen insbesondere mit der Steuerungs-/Regelungseinheit in Signalverbindung.

Der Entfernungssensor dient insbesondere zum Erfassen einer Entfernung zu einem Objekt. Der Entfernungssensor kann ein Entfernungssignal erzeugen und an die Steuerungs-/Regelungseinheit übermitteln, die aus dem Entfernungssignal ein entsprechendes Stellsignal erzeugen kann. Ein derartiges Stellsignal dient insbesondere für eine Fokussierautomatik. Die Fokussierautomatik dient insbesondere zum automatisierten und insbesondere vollautomatischen, Fokussieren einer Kamera und insbesondere einer Wärmebildkamera. Insbesondere dient die Fokussierautomatik zum Fokussieren eines an der Kamera angebrachten Objektivs. Dazu kann die Fokussierautomatik einen Stellantrieb, insbesondere einen Stellmotor aufweisen, der mit einer Mechanik derart zusammenwirkt, dass das Objektiv automatisiert betätigbar ist.

Alternativ ist es möglich, dass die Fokussierautomatik unabhängig von dem Stellsignal des Entfernungssensors betätigt wird, indem ein Benutzer anhand des an das Endgerät übertragenen Bildes eine entsprechende Fokussierung, also Scharfstellung, am Objektiv vornimmt. Dazu kann ein Eingabegerät mit der Steuerungs-/Regelungseinheit in Signalverbindung stehen und dem Benutzer das Verändern der Entfernungseinstellung am Objektiv über die Fokussierautomatik ermöglichen. Das Eingabegerät kann ein Berührbildschirm des Endgerätes sein, der beispielsweise logische "+"- und "-"-Schaltflächen aufweist. Die Schaltflächen können auch als mechanische Schaltflächen, insbesondere außerhalb des Berührbildschirms, ausgeführt sein, insbesondere als Bestandteil der Fernbedienung. Der Benutzer kann intuitiv Fokussieren. Insbesondere kann der Benutzer eine Fokussierung der Kamera vornehmen, ohne die Kamera berühren zu müssen. Sowohl die grundsätzliche Entfernungseinstellung als auch ein mögliches Nachjustieren ist automatisiert möglich.

Ein Stativ gemäß Anspruch 8 weist eine erweiterte Funktionalität auf. Mittels eines Beleuchtungselements, insbesondere eines LED-Beleuchtungselements, insbesondere eines LED-Spots, ist es ermöglicht, einen Zielbereich, insbesondere eine Wildunfallstelle, auszuleuchten. Arbeiten in der Dunkelheit ist dadurch erleichtert.

Besonders vorteilhaft ist es, wenn das Beleuchtungselement mittels einer Verstellautomatik einen verstellbaren Lichtkegel erzeugen kann. Das Beleuchtungselement ist insbesondere ein fokussierbares Beleuchtungselement, insbesondere ein fokussierbarer Scheinwerfer. Insbesondere kann die Leuchtweite des Beleuchtungselements mittels eines Verstellantriebs, insbesondere mittels eines ansteuerbaren Stellmotors gezielt verändert werden, insbesondere ermöglicht der Motor eine Verlagerung der Linse derart, dass die Leuchtweite gezielt verändert werden kann. Die gezielte Veränderung der Leuchtweite kann insbesondere über ein Eingabegerät erfolgen, das mit der Steuerungs-/Regelungseinheit in Signalverbindung steht.

Ein Stativ gemäß Anspruch 9 ermöglicht die flexible Anpassung der Ausleuchtung bezüglich der Entfernung des Zielbereichs. Es ist insbesondere denkbar, dass das Kraftfahrzeug mit dem daran befestigten Stativ an eine Wildunfallstelle oder einen anderen Zielbereich nicht ungehindert anfahren kann. Mittels einer Linsenanordnung ist es möglich, die Brennweite des Beleuchtungselements veränderlich anzupassen. Insbesondere ist die Linsenanordnung mit der Steuerungs-/Regelungseinheit in Signalverbindung. Die Linsenanordnung kann zusätzlich zu dem Beleuchtungselement angeordnet oder in dem Beleuchtungselement integriert ausgeführt sein.

Ein Stativ gemäß Anspruch 10 ermöglicht ein, insbesondere optisches, Markieren des Zielobjekts. Als Markierungselement dient beispielsweise ein Infrarot-Lichtsignal und/oder ein Laser-Lichtsignal, insbesondere ein Laser-Spot. Es ist dadurch möglich, ein Zielobjekt, insbesondere ein Wildtier, mit dem Markierungselement anzustrahlen und dadurch optisch zu markieren. Ein Jäger, der eine Schusswaffe mit Infrarot-Optik nutz, kann das so markierte Zielobjekt einfacher auffinden.

Ein Stativ gemäß Anspruch 11 weist eine verbesserte Funktionalität auf. Insbesondere ermöglicht die Steuerungs-/Regelungseinheit einen Suchmodus. Bei dem Suchmodus wird ein veränderlich festlegbarer Suchbereich definiert, in dem die Antriebe, insbesondere der Drehantrieb und/oder der Schwenkantrieb, insbesondere gemäß einem vorgegebenen Bewegungsmuster abfahren, also scannen. Der Suchbereich wird insbesondere durch einen Schwenkwinkelbereich für den Drehantrieb und/oder den Schwenkantrieb definiert. Der jeweilige Winkelbereich für den Drehantrieb und/oder den Schwenkantrieb kann von dem Nutzer veränderlich vorgegeben werden. Es ist auch denkbar, den Winkelbereich für den Suchmodus in der Steuerungs-/Regelungseinheit fest zu hinterlegen, um die Handhabung dieser Funktion zu vereinfachen.

Ein System gemäß Anspruch 12 weist im Wesentlichen die Vorteile des Stativs gemäß Anspruch 1 auf, worauf hiermit verwiesen wird. Vorteilhaft ist es, wenn das von dem Bildaufnahmegerät erzeugte Bildsignal über ein Anzeigegerät ausgegeben wird. Das Anzeigegerät ist beispielsweise ein Tabletcomputer oder ein Smartphone. Das Anzeigegerät kann aber auch ein im Kraftfahrzeug fest verbautes Display sein, das insbesondere für Multimediaanwendungen im Kraftfahrzeug, insbesondere für ein Navigationssystem ohnehin vorhanden ist. Die Signalverbindung zwischen dem Bildaufnahmegerät und dem Anzeigegerät ist insbesondere kabellos. Insbesondere kann die Verbindung über eine drahtloste Internetschnittstelle aufweisende Anwendungssoftware, eine sogenannte App, des Bildaufnahmegerätes erfolgen. Eine kabelgebundene Signalverbindung ist dann vorteilhaft, wenn das Anzeigegerät dauerhaft und insbesondere fest installiert in dem Kraftfahrzeug angeordnet ist.

Das Bildaufnahmegerät weist optische und insbesondere thermische Kamerafunktionen auf. Das Bildaufnahmegerät ist insbesondere eine Wärmebildkamera. Das Bildaufnahmegerät verfügt insbesondere über einen optischen Zoom. Es ist auch denkbar, als Bildaufnahmegerät eine optische Kamera zu verwenden.

Ein System gemäß Anspruch 13 ermöglicht eine verbesserte Funktionalität. Als Anzeigegerät kann zusätzlich oder alternativ zu den vorstehend genannten Anzeigegeräten eine VR-Brille dienen. Besonders vorteilhaft ist es, wenn die VR-Brille in bidirektionaler Signalverbindung mit der Steuerungs-/Regelungseinheit steht. In diesem Fall ist es möglich, die Steuerung der Antriebe des Stativs über eine Bewegung der VR-Brille, also über eine Kopfbewegung des Brillenträgers, zu steuern.

Zusätzlich oder alternativ ist es möglich, dass die Antriebe des Stativs mittels eines Eingabegerätes, insbesondere eines Joysticks, betätigt werden, den ein Benutzer bedienen kann, insbesondere, wenn er die VR-Brille trägt.

Es wurde insbesondere gefunden, dass das erfindungsgemäße Stativ und ein damit ausgestattetes System beispielsweise für die Verwendung von Sicherheitsdiensten und/oder Behörden, insbesondere Sicherheitsbehörden geeignet sind. Auch die Nutzung des Stativs und/oder des Systems für die Seefahrt ist möglich.

Sowohl die in den Schutzansprüchen angegebenen Merkmale als auch die in dem Ausführungsbeispiel eines erfindungsgemäßen Stativs angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine perspektivische Ansicht eines schematisiert dargestellten erfindungsgemäßen Stativs,
- Fig. 2: eine perspektivische Ansicht auf ein geöffnetes Gehäuses des Stativs gemäß Fig. 1,
- Fig. 3: eine Schnittdarstellung gemäß Schnittlinie III-III in Fig. 1,
- Fig. 4: eine Schnittdarstellung gemäß Schnittlinie IV-IV in Fig. 1.

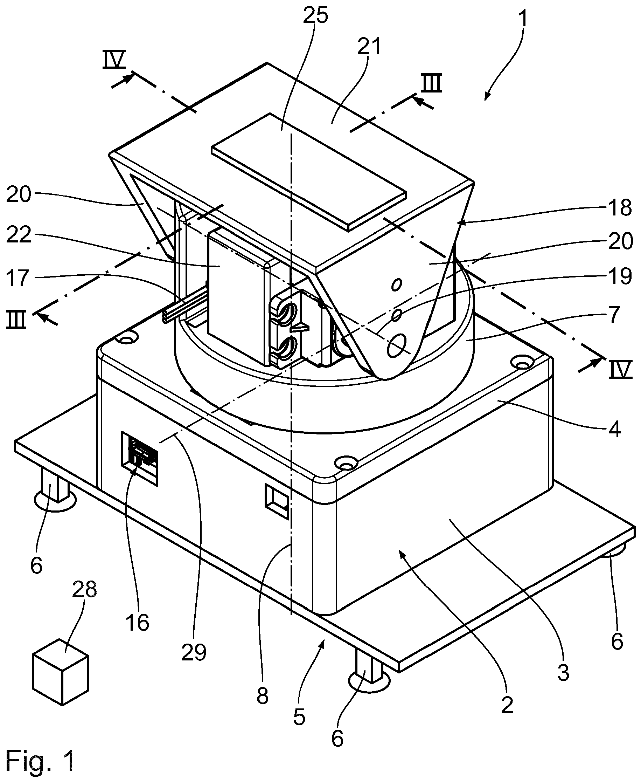

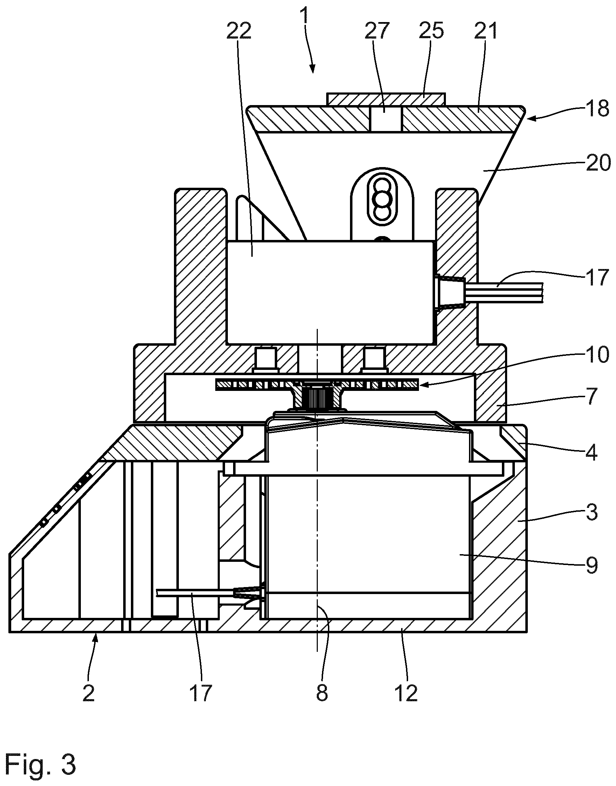

Ein in Fig. 1 bis 4 als Ganzes mit 1 gekennzeichnetes Stativ weist ein Gehäuse 2 auf, das aus Kunststoffmaterial hergestellt ist. Das Gehäuse 2 umfasst einen Gehäusegrundkörper 3, an dem ein Deckel 4 anschraubbar ist. Der Gehäusegrundkörper 3 ist im Wesentlichen rechteckförmig ausgeführt.

An einer dem Deckel 4 gegenüberliegenden Unterseite des Gehäuses 2 ist eine in Fig. 1 rein schematisch dargestellte Befestigungseinheit 5 mit Befestigungselementen 6 vorgesehen. Die Befestigungselemente 6 definieren eine Befestigungsebene der Befestigungseinheit 5. Die Befestigungsebene ist insbesondere parallel zu der Befestigungsplatte und insbesondere zu der Unterseite des Gehäuses 2, orientiert. Die Befestigungseinheit 5 weist eine Befestigungsplatte auf, an deren Unterseite, die dem Gehäuse 2 abgewandt ist, mindestens ein Befestigungselement 6 angeordnet ist. Es ist auch denkbar, auf die Befestigungsplatte zu verzichten und die Befestigungselemente 6 unmittelbar an der Unterseite des Gehäuses 2 anzubringen. Gemäß dem gezeigten Ausführungsbeispiel sind vier Befestigungselemente 6, jeweils in den Eckenbereichen der Befestigungsplatte, angeordnet. Es können auch mehr oder weniger Befestigungselemente 6 vorgesehen und/oder an der Befestigungsplatte oder dem Gehäuse 2 angeordnet sein. Gemäß dem gezeigten Ausführungsbeispiel sind die Befestigungselemente 6 jeweils als Saugnapfbefestigungen ausgeführt.

An dem Gehäuse 2, insbesondere an dem Deckel 4, ist ein Drehteller 7 drehbar um eine vertikale Drehachse 8 angeordnet. Die Drehachse 8 ist insbesondere senkrecht zu der Befestigungsebene orientiert.

Der Drehteller 7 ist mittels eines Drehantriebs 9 mechanisch gekoppelt. Mittels des Drehantriebs 9 kann der Drehteller 7 bezüglich der Drehachse 8 gegenüber dem Gehäuse 2 um einen Drehwinkel gedreht werden. Der Drehwinkel kann beliebig festgelegt werden. Der Drehantrieb 9 ermöglicht einen Drehwinkelbereich zwischen 0° und 360°. Der Drehantrieb 9 ist als bürstenloser Motor ausgeführt. Der Drehantrieb 9 weist an seinem Abtrieb ein Kraftübertragungselement 10 auf. Das Kraftübertragungselement 10 ist sternförmig ausgeführt und weist mehrere Verbindungsöffnungen 11 auf. Die Verbindungsöffnungen 11 sind exzentrisch zur Drehachse 8 angeordnet. An mindestens einer Verbindungsöffnung 11 ist das Kraftübertragungselement 10 mit dem Drehteller 7 verbunden, insbesondere verschraubt. Die Drehbewegung des Drehantriebs 9 wird von dem am Abtrieb des Drehantriebs 9 befestigten Kraftübertragungselements 10 auf den Drehteller 7 übertragen.

Die Kraftübertragung von dem Drehantrieb 9 auf den Drehteller 7 kann auch in anderer Weise, beispielsweise mittels einer Zahnradverbindung oder durch formschlüssiges Eingreifen des Kraftübertragungselements 10 an einer entsprechenden Ausnehmung 12 in dem Drehteller 7 erfolgen.

Der Drehantrieb 9 ist in dem Gehäuse 2 angeordnet. Dazu kann in dem Gehäuse 2 eine Motorhalterung vorgesehen sein. Die Motorhalterung wird insbesondere durch eine entsprechende Ausnehmung 13 in dem Deckel 4 des Gehäuses gebildet. Die Anordnung des Drehantriebs 9 in dem Gehäuse 2 ist dadurch zusätzlich stabilisiert. Der Drehantrieb 9 ist auf der Bodenplatte 12 des Gehäuses 2 zuverlässig angeordnet.

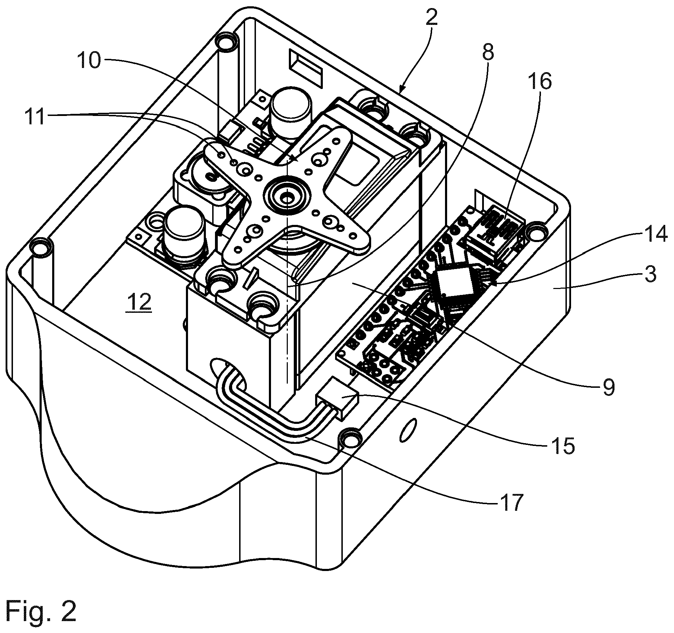

In dem Gehäuse 2 ist eine Steuerungs-/Regelungseinheit 14 integriert angeordnet. Die Steuerungs-/Regelungseinheit 14 wird durch mehrere Platinen gebildet, die zur Ansteuerung des Drehantriebs 9 dienen. Die hierfür erforderlichen Kabelverbindungen sind aus Darstellungsgründen nicht gezeigt. Die Steuerungs-/Regelungseinheit 14 ist mit einer rein schematisch dargestellten Stromquelle 15 in Form eines Akkumulators verbunden. Über den Ladeanschluss 16, der als USB-Buchse ausgeführt ist, kann die Stromquelle 15 aufgeladen werden. Die Stromquelle 15 ist über ein Stromkabel 17 mit dem Drehantrieb 9 verbunden. Das Stromkabel 17 ist in Fig. 2 rein schematisch dargestellt. Aus Platzgründen kann die Stromquelle 15 mit dem Stromkabel 17 auch außerhalb des Gehäuses 2 angeordnet sein.

An dem Drehteller 7 ist ein Sockel 18 um eine Schwenkachse 19 schwenkbar befestigt. Der Sockel 18 ist portalförmig ausgeführt mit zwei Seitenplatten 20 und einer die Seitenplatten 20 verbindenden Deckplatte 21. Der Sockel 18 ist insbesondere einteilig ausgeführt. Die Seitenplatten 20 weisen eine in einer Ebene senkrecht zur Schwenkachse 19 dreieckförmige Kontur auf. Die Deckplatte 21 ist rechteckförmig ausgeführt. Die Seitenplatten 20 sind jeweils senkrecht zur Schwenkachse 19 orientiert.

Gemäß Fig. 1 befindet sich der Sockel 18 in einer Ausgangsposition, in der die Deckplatte 21 senkrecht zur Drehachse 8 und insbesondere horizontal orientiert ist.

Das Stativ 1 weist einen Schwenkantrieb 22 auf, der ein angetriebenes Schwenken des Sockels 18 bezüglich der Schwenkachse 19 ermöglicht.

Der Schwenkantrieb 22 ist auf dem Drehteller 7 angeordnet und insbesondere daran befestigt. An dem Abtrieb des Schwenkantriebs 22 ist ein Kraftübertragungselement 23, insbesondere in Form eines Schwenkhebels, befestigt. Der Schwenkhebel ist formschlüssig und/oder kraftschlüssig mit dem Abtrieb des Schwenkantriebs 22 verbunden. Der Schwenkhebel 23 weist Durchgangsöffnungen 24 auf, die mit korrespondierenden Öffnungen des Sockels 18, insbesondere in einer der Seitenplatten 20, fluchtend anbringbar sind. Über die fluchtenden Öffnungen ist eine unmittelbare Verbindung des Schwenkhebels 23 mit dem Sockel 18, insbesondere der Seitenplatte 20, möglich. Eine Schwenkbewegung des Schwenkantriebs 22 wird über den Schwenkhebel 23 auf den Sockel 18 übertragen. Gemäß dem gezeigten Ausführungsbeispiel beträgt ein zulässiger Schwenkwinkelbereich für den Schwenkantrieb 22 bezüglich der Schwenkachse 19 -90° bis +90°.

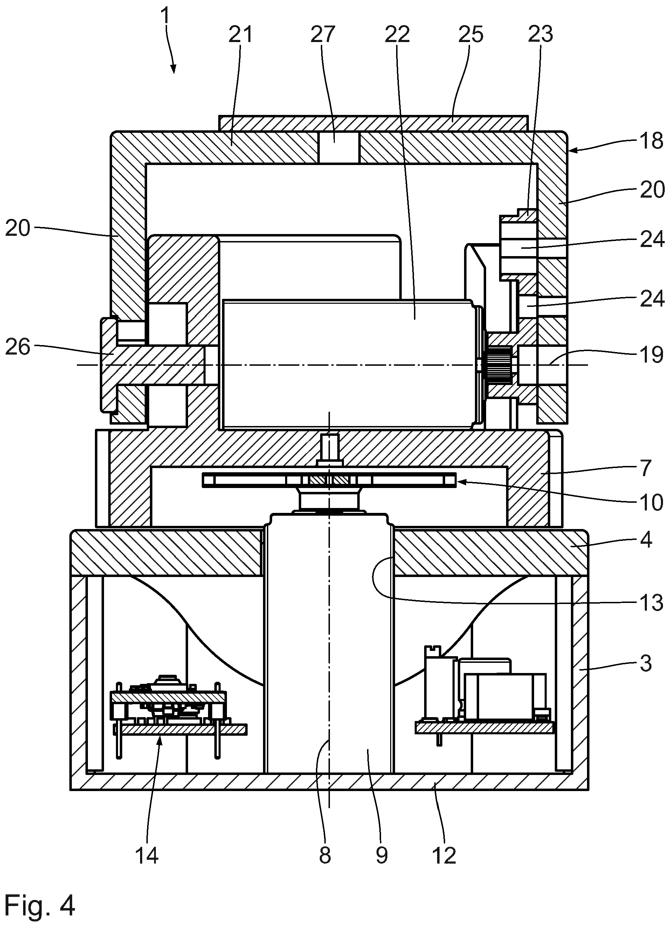

Zur Stabilisierung der Schwenkbewegung des Sockels 18 ist an der der in Fig. 4 links dargestellten Seitenplatte 20, die der Seitenplatte 20 gegenüberliegend angeordnet ist, an der der Schwenkhebel 23 angreift, ein Führungsbolzen 26 angeordnet. Der Führungsbolzen 26 dient zur Führung der Schwenkbewegung bezüglich der Schwenkachse 19.

Der Schwenkantrieb 22 ist über ein weiteres Stromkabel 17 an die Stromquelle 15 angeschlossen. Das Stromkabel 17 kann auch innerhalb des Stativs, insbesondere durch den Drehteller 7 und den Deckel 4 in das Gehäuse 2 geführt werden.

An einer Oberseite des Sockels 18, insbesondere der Deckplatte 21, ist eine in Fig. 1 rein schematisch dargestellte Kopplungseinheit 25 angeordnet.

Die Kopplungseinheit 25 ist insbesondere als Schnellwechseladapter ausgeführt, der eine unkomplizierte und flexible Kopplung eines Bildaufnahmegeräts, insbesondere einer Wärmebildkamera, an dem Stativ 1 ermöglicht.

Zur Befestigung der Kopplungseinheit 25 ist in dem Sockel 18, insbesondere der Deckplatte 21, eine Durchgangsbohrung 27 angeordnet, die beispielsweise für eine Schraubbefestigung genutzt werden kann.

Die Steuerungs-/Regelungseinheit 14 steht mit dem Schwenkantrieb 22 in Signalverbindung.

Zum Bedienen des Stativs 1 und insbesondere zum Steuern der Antriebe 8, 22 dient eine in Fig. 1 rein schematisch dargestellte Fernbedienung 28, die mittels einer Funkverbindung, insbesondere via Bluetooth, mit der Steuerungs-/Regelungseinheit 14 in Signalverbindung steht.

Das Stativ 1 weist eine Rollachse 29 auf, die insbesondere senkrecht zur Drehachse 8 und insbesondere senkrecht zur Schwenkachse 19 orientiert ist. Insbesondere sind die drei Achsen 8, 19, 29 jeweils paarweise zueinander senkrecht orientiert. Die drei Achsen 8, 19, 29 sind in den drei Raumrichtungen eines kartesischen Koordinatensystems orientiert. Vorteilhaft ist es, wenn das Stativ 1, insbesondere der Drehteller 7 und/oder der Sockel 18 schwimmend bezüglich der Rollachse 29 gelagert sind. Um Fahrbewegungen und insbesondere Neigungen des Stativs gegenüber einer Vertikalorientierung auszugleichen, kann insbesondere ein Rollantrieb vorgesehen sein, der eine Stellbewegung der ausgelenkten Komponenten um die Rollachse 29 zurück in eine Grundorientierung ermöglicht. Die Rollachse 29 kann bezüglich der Längsachse 8 und/oder bezüglich der Schwenkachse 19 auch an einer anderen Position des Stativs 1 angeordnet sein.

## Patentansprüche

1. Stativ für ein Bildaufnahmegerät, insbesondere eine Wärmebildkamera, wobei das Stativ (1) umfasst
a. einen bezüglich einer Befestigungseinheit (5) um eine Drehachse (8) drehbaren Drehteller (7),
b. einen Drehantrieb (9) zum Drehen des Drehtellers (7) um die Drehachse (8),
c. einen an dem Drehteller (7) um eine Schwenkachse (19) schwenkbar befestigten Sockel (18),
d. einen Schwenkantrieb (22) zum Schwenken des Sockels (18),
e. eine mit dem Drehantrieb (9) und mit dem Schwenkantrieb (22) verbundene Stromquelle (15),
f. eine an dem Sockel (18) befestigte Kopplungseinheit (25) zum lösbaren Befestigen des Bildaufnahmegerätes,
g. eine mit dem Drehantrieb (9) und mit dem Schwenkantrieb (22) in Signalverbindung stehende Steuerungs-/Regelungs-Einheit (14) zum gesteuerten und/oder geregelten Betätigen der Antriebe (9, 22),
h. eine mit der Steuerungs-/Regelungs-Einheit (14) in Signalverbindung stehende Fernbedienung (28),
**dadurch gekennzeichnet, dass**
i. das Stativ (1) die Befestigungseinheit (5) zum lösbaren Befestigen des Stativs (1) an einer Unterlage umfasst, wobei die Befestigungseinheit (5) mindestens ein Befestigungselement (6) aufweist, das als Saugnapf und/oder als Magnetelement und/oder als Schraubbefestigung ausgeführt ist,
j. der Sockel (18) um eine Rollachse schwenkbar an dem Drehteller (7) befestigt ist, wobei ein Rollantrieb vorhanden ist, um eine Ausgleichs-Rollbewegung zu veranlassen, wenn der Sockel (18) aus einer vertikalen Grundstellung ausgelenkt wird, wobei der Rollantrieb mit der Steuerungs-/Regelungs-Einheit (14) in bidirektionaler Signalverbindung steht.

2. Stativ gemäß Anspruch 1, **gekennzeichnet durch** ein Gehäuse (2), wobei insbesondere die Steuerungs-/Regelungs-Einheit (14), der Drehantrieb (9) und/oder die Stromquelle (15) in dem Gehäuse angeordnet sind.

3. Stativ gemäß einem der vorstehenden Ansprüche, **dadurch gekennzeichnet, dass** das mindestens eine Befestigungselement (6) schwenkbar, insbesondere mittels einer Kugelkopfbefestigung, gegenüber dem Sockel (18) ausrichtbar ist.

4. Stativ gemäß einem der vorstehenden Ansprüche, **dadurch gekennzeichnet, dass** der Drehantrieb (9) und/oder der Schwenkantrieb (22) als Elektromotor, insbesondere als bürstenloser Motor, ausgeführt ist.

5. Stativ gemäß einem der vorstehenden Ansprüche, **dadurch gekennzeichnet, dass** die Fernbedienung (28) kabellos mit der Steuerungs/Regelungs-Einheit in Signalverbindung steht.

6. Stativ gemäß einem der vorstehenden Ansprüche, **gekennzeichnet durch** einen Positionssensor, der insbesondere im Gehäuse (2) angeordnet ist.

7. Stativ gemäß einem der vorstehenden Ansprüche, **gekennzeichnet durch** einen Entfernungssensor, der insbesondere im Gehäuse (2) angeordnet ist.

8. Stativ gemäß einem der vorstehenden Ansprüche, **gekennzeichnet durch** mindestens ein Beleuchtungselement zum Ausleuchten der Umgebung.

9. Stativ gemäß Anspruch 8, **dadurch gekennzeichnet, dass an dem** Beleuchtungselement eine, insbesondere steuerbare, Linsenanordnung angebracht ist zum veränderlichen Festlegen des Brennpunkts des mindestens einen Beleuchtungselements.

10. Stativ gemäß einem der vorstehenden Ansprüche, **gekennzeichnet durch** ein, insbesondere optisches, Markierungselement zum optischen Markieren eines Zielobjektes.

11. Stativ gemäß einem der vorstehenden Ansprüche, **dadurch gekennzeichnet, dass** die Steuerung-/Regelungs-Einheit (14) derart ausgestaltet ist, dass der Drehantrieb (9) und/oder der Schwenkantrieb (22) in einem, insbesondere automatisierbaren, Suchmodus betreibbar sind.

12. System zum Erfassen von Objekten, wobei das System umfasst
a. ein an einer Unterlage lösbar befestigbares Stativ (1) gemäß einem der vorstehenden Ansprüche,
b. ein mit dem Stativ (1) koppelbares Bildaufnahmegerät, insbesondere eine Wärmebildkamera,
c. ein mit dem Bildaufnahmegerät in Signalverbindung stehendes Anzeigegerät.

13. System gemäß Anspruch 12, **dadurch gekennzeichnet, dass** das Anzeigegerät als VR-Brille ausgeführt ist, die insbesondere mit der Steuerungs-/Regelungs-Einheit (14) in Signalverbindung steht zum Steuern des Stativs (1).

## Claims

1. A stand for an image recording device, in particular a thermal imaging camera, wherein the stand (1) comprises
a. a rotary plate (7) which is rotatable about a rotation axis (8) with respect to a fastening unit (5),
b. a rotary drive (9) for rotating the rotary plate (7) about the rotation axis (8),
c. a base (18) which is fastened to the rotary plate (7) so as to be pivotable about a pivot axis (19),
d. a pivot drive (22) for pivoting the base (18),
e. a power source (15) which is connected to the rotary drive (9) and to the pivot drive (22),
f. a coupling unit (25) which is fastened to the base (18) for detachably fastening the image recording device,
g. an open-loop/closed-loop control unit (14) which is connected in a signal-transmitting manner to the rotary drive (9) and to the pivot drive (22) for actuating the drives (9, 22) with open-loop and/or closed-loop control,
h. a remote control means (28) which is connected in a signal-transmitting manner to the open-loop/closed-loop control unit (14),
**characterized in that**
i. the stand comprises the fastening unit (5) for detachably fastening the stand (1) to a surface, wherein the fastening unit (5) has at least one fastening element (6) which is designed as a suction cup and/or as a magnetic foot and/or as screw fastening,
j. the base (18) is attached to the rotary plate (7) so as to be pivotable about a rolling axis, wherein a rolling drive is provided which causes a corresponding compensating rolling movement as soon as the base (18) is deflected from a vertical basic position, wherein the rolling drive is connected in a bidirectional signal-transmitting manner to the open-loop/closed-loop control unit (14).

2. A stand according to claim 1, **characterized by** a housing (2), wherein in particular the open-loop/closed-loop control unit (14), the rotary drive (9) and/or the power source (15) are arranged in the housing.

3. A stand according to any one of the preceding claims, **characterized in that** the at least one fastening element (6) is pivotably aligned to the base (18), in particular by means of a ball head fastening.

4. A stand according to any one of the preceding claims, **characterized in that** the rotary drive (9) and/or the pivot drive (22) is designed as an electric motor, in particular as a brushless motor.

5. A stand according to any one of the preceding claims, **characterized in that the** remote control means (28) is in wireless signal connection with the open-loop/closed-loop control unit.

6. A stand according to any one of the preceding claims, **characterized by** a position sensor which is arranged in particular in the housing (2).

7. A stand according to any one of the preceding claims, **characterized by** a distance sensor which is arranged in particular in the housing (2).

8. A stand according to any one of the preceding claims, **characterized by** at least one lighting element for illuminating the surroundings.

9. A stand according to claim 8, **characterized in that** a lens arrangement, in particular a controllable lens arrangement, is attached to the lighting element for variably setting the focal point of the at least one lighting element.

10. A stand according to any one of the preceding claims, **characterized by** a marking element, in particular an optical one, for optically marking a target object.

11. A stand according to any one of the preceding claims, **characterized in that** the open-loop/closed-loop control unit (14) is designed in such a manner that the rotary drive (9) and/or the pivot drive (22) can be operated in a search mode, in particular a search mode that can be automated.

12. A system for detecting objects, wherein said system comprises
a. a stand (1) according to any one of the preceding claims which can be detachably fastened to a surface,
b. an image recording device which can be coupled to the stand (1), in particular a thermal imaging camera,
c. a display device which is connected in a signal-transmitting manner to the image recording device.

13. A system according to claim 12, **characterized in that** the display device is designed as VR glasses, which in particular are connected in a signal-transmitting manner to the open-loop/closed-loop control unit (14) for controlling the stand (1).

## Revendications

1. Support pour un appareil de prise de vue, en particulier une caméra thermique, le support (1) comprenant
a. un plateau tournant (7) pouvant tourner autour d'un axe de rotation (8) par rapport à une unité de fixation (5),
b. un entraînement en rotation (9) pour faire tourner le plateau tournant (7) autour de l'axe de rotation (8),
c. un socle (18) fixé au plateau tournant (7) de manière à pouvoir pivoter autour d'un axe de pivotement (19),
d. un entraînement en pivotement (22) pour faire pivoter le socle (18),
e. une source d'alimentation électrique (15) reliée à l'entraînement en rotation (9) et à l'entraînement en pivotement (22),
f. une unité d'accouplement (25) fixée au socle (18) pour la fixation amovible de l'appareil de prise de vue,
g. une unité de commande/régulation (14) en liaison par signaux avec l'entraînement en rotation (9) et avec l'entraînement en pivotement (22) pour l'actionnement commandé et/ou régulé des entraînements (9, 22),
h. une télécommande (28) en liaison par signaux avec l'unité de commande/régulation (14),
**caractérisé en ce que**
i. le support (1) comprend l'unité de fixation (5) pour la fixation amovible du support (1) sur une base, l'unité de fixation (5) présentant au moins un élément de fixation (6) qui est réalisé sous la forme d'une ventouse et/ou d'un élément magnétique et/ou d'une fixation à vis,
j. le socle (18) est fixé de manière à pouvoir pivoter autour d'un axe de roulement sur le plateau tournant (7), un entraînement en roulement étant prévu pour provoquer un mouvement de roulement de compensation lorsque le socle (18) est dévié d'une position de base verticale, l'entraînement en roulement étant en liaison par signaux bidirectionnelle avec l'unité de commande/régulation (14).

2. Support selon la revendication 1, **caractérisé par** un boîtier (2), dans lequel sont en particulier disposés l'unité de commande/régulation (14), l'entraînement en rotation (9) et/ou la source d'alimentation électrique (15).

3. Support selon l'une des revendications précédentes, **caractérisé en ce que** ledit au moins un élément de fixation (6) peut être orienté de manière à pouvoir pivoter, en particulier au moyen d'une fixation à rotule, par rapport au socle (18).

4. Support selon l'une des revendications précédentes, **caractérisé en ce que** l'entraînement en rotation (9) et/ou l'entraînement en pivotement (22) sont réalisés sous la forme d'un moteur électrique, en particulier d'un moteur sans balais.

5. Support selon l'une des revendications précédentes, **caractérisé en ce que** la télécommande (28) est en liaison par signaux sans fil avec l'unité de commande/régulation.

6. Support selon l'une des revendications précédentes, **caractérisé par** un capteur de position qui est en particulier disposé dans le boîtier (2).

7. Support selon l'une des revendications précédentes, **caractérisé par** un capteur de distance, qui est en particulier disposé dans le boîtier (2).

8. Support selon l'une des revendications précédentes, **caractérisé par** au moins un élément d'éclairage pour éclairer l'environnement.

9. Support selon la revendication 8, **caractérisé en ce qu'**un agencement de lentilles, en particulier commandable, est monté sur l'élément d'éclairage afin de déterminer de manière variable le point focal dudit au moins un élément d'éclairage.

10. Support selon l'une des revendications précédentes, **caractérisé par** un élément de repérage, en particulier optique, destiné à repérer optiquement un objet cible.

11. Support selon l'une des revendications précédentes, **caractérisé en ce que** l'unité de commande/régulation (14) est conçue de telle sorte que l'entraînement en rotation (9) et/ou l'entraînement en pivotement (22) peuvent être utilisés dans un mode de recherche, en particulier automatisable.

12. Système pour détecter des objets, le système comprenant :
a. un support (1) selon l'une des revendications précédentes pouvant être fixé de manière amovible à une base,
b. un appareil de prise de vue, en particulier une caméra thermique, pouvant être couplé au support (1),
c. un appareil d'affichage en liaison par signaux avec l'appareil de prise de vue.

13. Système selon la revendication 12, **caractérisé en ce que** l'appareil d'affichage est réalisé sous la forme de lunettes de réalité virtuelle qui sont en particulier en liaison par signaux avec l'unité de commande/régulation (14) pour commander le support (1).
